# EUROPÄISCHE PATENTSCHRIFT

(11) **EP 3 565 501 B1**
(45) Veröffentlichungstag und Bekanntmachung des Hinweises auf die Patenterteilung: **05.05.2021**
(21) Anmeldenummer: 18711862.5
(22) Anmeldetag: 08.03.2018
(51) Int. Cl.: A61C 13/00, A61C 13/08

(54) **DIGITALE KORREKTURFAKTOREN UND HALTERUNG MIT DIGITALEN KORREKTURFAKTOREN VON REALEN VORKONFEKTIONIERTEN PROTHESENZÄHNEN**
DIGITAL CORRECTION FACTORS AND MOUNT HAVING DIGITAL CORRECTION FACTORS OF PHYSICAL PREFABRICATED PROSTHETIC TEETH
FACTEURS DE CORRECTION NUMÉRIQUES ET DISPOSITIF DE RETENUE COMPORTANT DES FACTEURS DE CORRECTION NUMÉRIQUES DE DENTS PROTHÉTIQUES PRÉFABRIQUÉES RÉELLES

(30) Priorität: 09.03.2017 DE 102017105044
(43) Veröffentlichungstag der Anmeldung: 13.11.2019
(73) Patentinhaber: Kulzer GmbH, 63450 Hanau (DE)
(72) Erfinder: SAVIC, Novica, 63526 Erlensee (DE); RENZ, Karl-Heinz, 63820 Elsenfeld (DE); GALL, Silke Maren, 63755 Alzenau (DE); ROMBECK, Stefan, 88690 Uhldingen-Mühlhofen (DE)
(74) Vertreter: Bendele, Tanja
(86) Internationale Anmeldenummer: PCT/EP2018/055804
(87) Internationale Veröffentlichungsnummer: WO 2018/162657

(56) Entgegenhaltungen:
- WO-A1-2016/169921
- WO-A2-2008/097874
- US-A1- 2005 276 672

## Beschreibung

Die Erfindung betrifft Korrekturfaktoren, insbesondere digitale Korrekturfaktoren oder gedruckte Korrekturfaktoren, als Translations(x,y,z)-Daten und/oder als Daten der Rotation der Zahnachse mindestens eines realen vorkonfektionierten Prothesenzahns bis zu einer Vielzahl an realen vorkonfektionierten Prothesenzähnen in einer Halterung zur materialabtragenden Bearbeitung der Prothesenzähne, wobei die Korrekturfaktoren vorzugsweise der Halterung als Barcode oder als Quick-Response Code zur Verwendung in einem digital gesteuerten materialabtragenden Verfahren zugeordnet sind, wobei die Halterung mindestens einen fixierten realen vorkonfektionierten Prothesenzahn bis zu einer Vielzahl an Prothesenzähnen aufweist. Gleichfalls betrifft die Erfindung die Halterung mit den zugeordneten digitalen Korrekturfaktoren sowie ein Verfahren zur Bestimmung der digitalen Korrekturfaktoren des mindestens einen realen vorkonfektionierten Prothesenzahns.

CIM-Prozesse (Computer-Integrated Manufacturing), wie CAD/CAM-Verfahren, gewinnen in der dentalen Prothetik zunehmend an Bedeutung. So ist es bei der dentalen Prothetik inzwischen üblich, die Gingiva- und Restzahnsituation im Patientenmund zu digitalisieren und den prothetischen Zahnersatz über CAD/CAM zu gestalten und anzufertigen. Zur Digitalisierung der Anordnung und Ausrichtung der Zähne und vorkonfektionierten Prothesenzähne wird ein Gipsmodell oder auch die Gingiva- und Restzahnsituation im Patientenmund gescannt.

Zur realen Aufstellung der Prothesenzähne ist es inzwischen üblich die digitalen Daten von vorkonfektionierten Prothesenzähnen für eine individualisierende Zahnaufstellung einer prothetischen Versorgung mit Prothesenbasis zu nutzen.

Die realen vorkonfektionierten Prothesenzähne können dazu in einer Halterung bereitgestellt werden. In der Regel erhält der Käufer einen generischen digitalen Datensatz der Halterungen und der virtuellen vorkonfektionierten Prothesenzähne. Ein Problem ist dabei, dass fertigungsbedingt die Halterung und die realen vorkonfektionierten Prothesenzähne, insbesondere in der Halterung, nicht genau die Ausrichtung und/oder Anordnung gemäß den generischen digitalen Daten aufweisen.

Es gibt bereits erste Verfahren, wie z.B. in WO2016/169921 und WO2008/097874 offenbart, die Teil- bzw. Totalprothetik digital aufzustellen und über CAD-Verfahren zu produzieren. In aktuellen Verfahren müssen zurzeit manuell die benötigten Korrekturen zur Anpassung der Daten der Abweichung der virtuellen und der realen Anordnung vorgenommen werden. So müssen z.B. Abweichungen der Zahnrohlinge manuell durch den Anwender in der Software ergänzt werden.

Aktuell ist es daher üblich, dass bei Feststellung von Abweichungen in der Ausrichtung und/oder Anordnung der realen Prothesenzähne in der Halterung der Anwender eine manuelle Korrektur der Parameter in der Software unter Anpassung der digitalen Daten vornimmt. Dazu ermittelt der Anwender manuell subjektiv die Abweichung der realen Prothesenzähne zu den virtuellen Prothesenzähnen, so dass die Anpassung der realen Prothesenzähne einer weiteren Fehlerquelle unterliegt. Die so hergestellten herausnehmbaren Prothesen mit vorkonfektionierten Zähnen weisen somit keine perfekte Passung auf.

Aufgabe der Erfindung war es eine Möglichkeit bereitzustellen, die fertigungsbedingten oder aus anderen Gründen bedingten Abweichungen in der Anordnung und/oder Ausrichtung von realen vorkonfektionierten Zähnen in einer Halterung zur materialabtragenden Bearbeitung reproduzierbar zu ermöglichen. Vorzugsweise sollen die Abweichungen digitalisiert bereitgestellt werden. Des Weiteren sollen die Informationen der Abweichungen für den Anwender leicht für die materialabtragende Bearbeitung zugänglich sein. Daher bestand auch die Aufgabe die Bearbeitung beim Kunden weiter zu automatisieren und die Bearbeitungszeiten der Prothesenzähne zu verkürzen.

Gelöst werden die erfindungsgemäßen Aufgaben durch die Gegenstände der Ansprüche 1, 8, 10, 12, 13 und 14 die in den Unteransprüchen sowie in der Beschreibung detaillierter beschrieben sind. Somit werden erfindungsgemäß dem Bearbeiter Korrekturfaktoren oder eine Halterung mit Korrekturfaktoren zur Verfügung gestellt, die die Informationen zur Abweichung in der Anordnung und/oder Ausrichtung der realen Prothesenzähne aufweisen.

Gegenstand der Erfindung ist somit die Bereitstellung von Korrekturfaktoren die beispielsweise als Barcode oder QR-Code den realen Prothesenzähnen oder der Halterung der Prothesenzähne zugeordnet werden. So können diese Korrekturfaktoren bereits vom Hersteller der z.B. Rohlinge, Rahmen, usw. ermittelt werden und mit Hilfe eines z.B. Barcodes oder QR Codes aufgedruckt, gelasert, usw. werden.

Diese vom Hersteller mitgelieferten Korrekturfaktoren brauchen dann vor Ort vom Anwender nur noch gescannt und in die CAM-Maschine bzw. Software eingelesen werden, sodass die Software automatisch die korrekte Adjustierung vornehmen kann und das Endergebnis in Bezug auf die Passgenauigkeit verbessert wird. Weitere Vorteile der Erfindung sind ein verminderter Materialeinsatz durch Wegfall von z.B. Mehrfacharbeit bei Passungsproblemen sowie eine erhebliche Zeitersparnis auf Seiten des Anwenders.

Unter einem vorkonfektionierten Prothesenzahn, insbesondere einem realen vorkonfektionierten Prothesenzahn, wird ein Prothesenzahn verstanden, der in einem industriellen Verfahren reproduzierbar herstellbar ist und vorzugsweise nur noch für eine individuelle Anpassung an den Träger von basal und/oder an der Okklusionsfläche beschliffen wird. Ein vorkonfektionierter Prothesenzahn kann ausgewählt sein aus einer Bibliothek von vorkonfektionierten Prothesenzähnen. Der vorkonfektionierte Prothesenzahn entspricht in seiner Geometrie in der Regel einem in einem digitalen Datensatz vorliegendem virtuellen vorkonfektionierten Prothesenzahn. Ein vorkonfektionierter Prothesenzahn kann von basal und/oder okklusal in der Länge individuell angepasst, insbesondere an den zukünftigen Träger angepasst werden. Der vorkonfektionierte Prothesenzahn kann ein dentales auspolymerisiertes optional anorganische Füllstoffe und/oder Dentalgläser enthaltendes Polymergemisch umfassen. Vorzugsweise weist der vorkonfektionierte Prothesenzahn eine Okklusionsfläche auf. Bevorzugt ist der vorkonfektionierte Prothesenzahn basal massiv und/oder weist zervikal keine Hohlräume auf. Ein vorkonfektionierter Prothesenzahn ist keine Krone. Ein vorkonfektionierter Prothesenzahn ist kein Sinterrohling, so dass bei seiner Verwendung in der Herstellung dentaler Produkte keine Schrumpfung zu berücksichtigen ist.

Gegenstand der Erfindung ist somit eine Halterung zur Verwendung in einem digital gesteuerten materialabtragenden Verfahren, insbesondere einem CAM-Verfahren, enthaltend mindestens einen fixierten realen vorkonfektionierten Prothesenzahn, wobei (i) die Halterung eine Ebene aufweist, in der mindestens ein flächiger dreidimensionaler Formkörper angeordnet ist, insbesondere mindestens zwei Formkörper, um die Prothesenzähne zwischen den einzelnen Formkörpern fixieren zu können, oder (ii) die Halterung eine Ebene aufweist in der mindestens zwei Klemmelemente angeordnet sind, wobei in dem Formkörper oder zwischen den Klemmelementen mindestens ein realer vorkonfektionierter Prothesenzahn fixiert ist, wobei die Zahnachse des mindestens einen vorkonfektionierten Prothesenzahns, insbesondere die jeweilige Zahnachse der mindestens zwei bis 32 Prothesenzähne, in einem Winkel von 20° bis 160° zur Ebene der Halterung angeordnet ist, und der mindestens eine realen Prothesenzahn von koronal und/oder von apikal in einem materialabtragenden Verfahren bearbeitet werden kann, und
- der Halterung Korrekturfaktoren, insbesondere digitale Korrekturfaktoren, für die räumliche, reale Anordnung, insbesondere umfassend die Ausrichtung, des mindestens einen realen vorkonfektionierten Prothesenzahns in Bezug auf eine Referenzanordnung A umfassend mindestens einem entsprechenden realen vorkonfektionierten Referenzprothesenzahns **A3** in einer Referenzhalterung **A1** der Halterung oder mindestens eines virtuellen vorkonfektionierten Referenzprothesenzahns **vA3,** optional in einer virtuellen Referenzhalterung **vA1** der Halterung 1, zugeordnet sind.

Die Korrekturfaktoren, insbesondere die digitalen Korrekturfaktoren, bilden dabei Translations(x,y,z)-Daten und optional die Daten der Rotation der jeweiligen äußeren Form des jeweiligen realen vorkonfektionierten Prothesenzahns in der IST-Anordnung zur SOLL-Anordnung, d.h. der Referenzanordnung (A). Somit sind die Korrekturfaktoren Informationen, insbesondere digitale Informationen, zur Abweichung in der räumlichen IST-Anordnung in Form von Translations(x,y,z)-Daten und/oder der Daten der Rotation der äußeren Oberfläche des jeweiligen mindestens einen realen vorkonfektionierten Prothesenzahns in Bezug auf die Referenzanordnung (A). Sofern auf die Rotation Bezug genommen wird, wird auf die Daten der Rotation der äußeren Oberfläche des jeweiligen mindestens einen realen vorkonfektionierten Prothesenzahns abgestellt.

Die Zahnachse ist definiert als die zentrale Achse eines Kreiszylinders, welcher den Zahn derart umschließt, dass die Grundflächen des Kreiszylinders koronal und apikal ausgerichtet sind.

Dabei ist es bevorzugt, wenn die Korrekturfaktoren als (i) digitale Korrekturfaktoren in Form eines Barcodes oder eines Quick-Response Codes gespeichert sind oder (ii) als scannbare Korrekturfaktoren grafisch wiedergegeben werden. Besonders bevorzugt sind die Korrekturfaktoren als Barcode oder als Quick-Response Code (QR-Code) der Halterung zugeordnet oder an der Halterung angeordnet, vorzugsweise können die Korrekturfaktoren als Barcode oder als QR-Code auf die Halterung oder an der Halterung aufgedruckt sein. In Weiteren Alternativen gilt es auch als der Halterung zugeordnet, wenn die Korrekturfaktoren dem mindestens einem realen Prothesenzahn, der Verpackung, einem Verpackungsbestandteil oder der Umverpackung aufgedruckt oder als Datei beigelegt werden.

Die mindestens ein oder mindestens zwei realen vorkonfektionierten Prothesenzähne können auch Anordnungen von mehreren realen, werkstoffeinstückigen, vorkonfektionierten Prothesenzähnen in Form einer Brücke umfassen.

Ferner ist Gegenstand der Erfindung eine Halterung umfassend Korrekturfaktoren als digitale Daten, insbesondere als Informationen, zur Abweichung in der räumlichen IST-Anordnung in Form von Translations(x,y,z)-Daten und/oder Daten der Rotation des mindestens einen realen vorkonfektionierten Prothesenzahns, insbesondere der Rotation der jeweiligen äußeren Form von mindestens einem realen Prothesenzahn, in Bezug auf eine Referenzanordnung **A,** insbesondere ist die Referenzanordnung eine SOLL-Anordnung, mindestens eines entsprechenden realen vorkonfektionierten Referenzprothesenzahns in einer realen Referenzhalterung **A1** und/oder mindestens eines virtuellen vorkonfektionierten Referenzprothesenzahns **vA3,** optional in einer virtuellen Referenzhalterung **vA1.**

Eine bevorzugte Halterung weist Korrekturfaktoren mit Informationen zur Abweichung in der räumlichen Anordnung in Form von Translations(x,y,z)-Daten und/oder zur Rotation von mindestens zwei realen Prothesenzähnen bis 32 Prothesenzähnen auf, insbesondere zwei bis 16 Prothesenzähnen, in Bezug auf eine Referenzanordnung **A** der entsprechenden realen Referenzprothesenzähnen **A3** in einer realen Referenzhalterung **A1** und/oder entsprechender virtueller Referenzprothesenzähne **vA3,** optional in einer virtuellen Referenzhalterung **vA1** auf.

Gleichfalls Gegenstand der Erfindung ist eine Halterung umfassenden mindestens einen Formkörper, insbesondere mindestens zwei Formkörper zwischen denen mindestens zwei reale vorkonfektionierte Prothesenzähne fixiert sind, oder eine Halterung mit Klemmelementen zwischen denen mindestens zwei reale vorkonfektionierte Prothesenzähne fixiert sind. Dabei ist die jeweilige Zahnachse der Prothesenzähne, insbesondere der zwei bis 32 Prothesenzähne, in einem Winkel von 20° bis 160° zur Ebene der Halterung angeordnet, so dass die mindestens zwei realen vorkonfektionierten Prothesenzähne von koronal und/oder von apikal in einem materialabtragenden Verfahren bearbeitet werden können, und wobei der Halterung Korrekturfaktoren für die räumliche Anordnung der mindestens zwei realen Prothesenzähne in Bezug auf eine Referenzanordnung **A** der entsprechenden realen Referenzprothesenzähne **A3** in einer Referenzhalterung **A1** oder der entsprechenden virtuellen Referenzprothesenzähne **vA3,** optional in einer virtuellen Referenzhalterung **vA1,** zugeordnet sind. Als ein materialabtragendes Verfahren werden fräsende, schneidende, abplatzende, polierende und/oder schleifende Bearbeitungen des Materials verstanden.

Eine bevorzugte Halterung weist Korrekturfaktoren als Informationen, insbesondere als digitale Daten mit Informationen, zur Abweichung in der räumlichen Anordnung in Form von Translations(x,y,z)-Daten bzw. diesen x,y,z-Koordinaten und/oder Daten zur Rotation der jeweiligen äußeren Form aller in der Halterung angeordneten realen vorkonfektionierten Prothesenzähne auf,
(i) in Bezug auf die Informationen in einem Datensatz mit Daten zur äußeren Form entsprechender Prothesenzähne in einer Referenzhalterung **A1** und/oder
(ii) in Bezug auf die Informationen in einem weiteren Datensatz mit Daten zur äußeren Form der entsprechenden virtuellen Referenzprothesenzähne **vA3,** optional in einer virtuellen Referenzhalterung **vA1.**

Ebenso ist eine Halterung bevorzugt, die einen oder mindestens zwei reale Prothesenzähne in dem Material des Formkörpers derart fixiert aufweist, dass die Zahnachse des einen oder der mindestens zwei Prothesenzähne in einem Winkel von 20° bis 160° zur Ebene der Halterung angeordnet sind. Die Fixierung in der Halterung kann beispielsweise durch Umspritzen des einen realen Prothesenzahns oder der mindestens zwei realen Prothesenzähne durch das Material des Formkörpers oder durch Einbetten des einen oder mindestens zwei realen Prothesenzähne in das Material des Formkörpers oder durch Eingießen des Materials des Formkörpers um den einen oder die mindestens zwei realen Prothesenzähne erfolgen.

Als Material des mindestens einen flächigen dreidimensionalen Formkörpers können bevorzugt a) Wachs, Kunststoff oder ein Hybridmaterial ausgewählt werden. Bevorzugt ist ein organisches, polymeres Material, vorteilhaft umfassend anorganische Füllstoffe. Alternativ können b) die mindestens zwei Klemmelemente den mindestens einen realen Prothesenzahn oder die mindestens zwei realen Prothesenzähne im Bereich ihres jeweiligen mittleren äußeren Umfangs zumindest bereichsweise umschließen, wobei vorzugsweise die Klemmelemente Ausnehmungen aufweisen, und deren Innenflächen zumindest bereichsweise formschlüssig zu Bereichen im Bereich des mittleren äußeren Umfangs der Prothesenzähne passen.

Gegenstand der Erfindung ist auch ein Verfahren zur Bestimmung der Korrekturfaktoren der räumlichen Anordnung des mindestens einen realen Prothesenzahns, insbesondere der mindestens zwei realen Prothesenzähne, in einer Halterung in Bezug auf eine Referenzanordnung **A** mindestens eines entsprechenden realen vorkonfektionierten Referenzprothesenzahns **A3** in einer realen Referenzhalterung **A1** oder mindestens eines virtuellen vorkonfektionierten Referenzprothesenzahns **vA3,** optional in einer virtuellen Referenzhalterung **vA1,** indem
- die Halterung mit der Ebene, in der mindestens ein flächiger dreidimensionaler Formkörper angeordnet ist, und wobei in dem Formkörper mindestens ein realer vorkonfektionierter Prothesenzahn fixiert ist, dessen Zahnachse in einem Winkel von 20° bis 160° zur Ebene der Halterung angeordnet ist, oder
- die Halterung mit der Ebene, in der mindestens zwei Klemmelemente derart angeordnet sind, dass zwischen den Klemmelementen mindestens ein realer vorkonfektionierter Prothesenzahn fixiert ist, dessen Zahnachse in einem Winkel von 20° bis 160° zur Ebene der Halterung angeordnet ist,
- mit einem Scanner die dreidimensionalen Informationen zur Anordnung der äußeren Form, insbesondere Informationen der Translations(x,y,z)-Daten und/oder der Rotation der jeweiligen äußeren Form, des mindestens einen realen Prothesenzahns in der Halterung digital, insbesondere dreidimensional, erfasst werden, und digitale Informationen der räumlichen, realen Anordnung erhalten werden,
- die digitalen Informationen der realen Anordnung mit den digitalen Daten mit Informationen der räumlichen Anordnung der Referenzanordnung **A** mindestens eines entsprechenden realen vorkonfektionierten Referenzprothesenzahns **A3** in einer realen Referenzhalterung der Halterung oder des mindestens einen virtuellen vorkonfektionierten Referenzprothesenzahns, optional in einer virtuellen Referenzhalterung der Halterung (1), verglichen werden,
- digitale Korrekturfaktoren in Bezug zu den Daten der Referenzanordnung bestimmt werden, und
- die Korrekturfaktoren ermittelt werden. Die so erhaltenen Korrekturfaktoren, liegen vorzugsweise als digitale Korrekturfaktoren, in Form eines Barcodes oder eines Quick-Response Codes gespeichert oder als scannbare Korrekturfaktoren, grafisch dargestellte Korrekturfaktoren vor.

Nach einer bevorzugten Ausführungsform des Verfahrens werden die Korrekturfaktoren, insbesondere die digitalen Korrekturfaktoren, als Barcode oder als Quick-Response (QR-Code) der Halterung zugeordnet oder an der Halterung angebracht, insbesondere werden die Korrekturfaktoren auf die Halterung aufgedruckt.

Ferner ist Gegenstand der Erfindung die Verwendung von Korrekturfaktoren oder von digitalen Korrekturfaktoren zur koronalen und/oder apikalen Bearbeitung, insbesondere zur materialabtragenden Bearbeitung, wie einer fräsenden, schleifenden, polierenden, bohrenden, scheidenden, schabenden Bearbeitung, des mindestens einen realen vorkonfektionierten Prothesenzahns in der Halterung zur Verwendung in einem materialabtragenden Verfahren, wobei der Halterung eine Anschlussgeometrie zum Festlegen der Halterung an einer CAM-Maschine zugeordnet ist.

Bevorzugt ist die Verwendung der digitalen Korrekturfaktoren umfassend Informationen zur Abweichung in der räumlichen IST-Anordnung in Form von Translations(x,y,z)-Daten bzw. diesen x,y,z-Koordinaten und/oder Daten der Rotation der jeweiligen äußeren Form des mindestens einen, jeweiligen realen vorkonfektionierten Prothesenzahns in Bezug auf eine Referenzanordnung **A,** d.h. der SOLL-Anordnung, mindestens eines entsprechenden realen vorkonfektionierten Referenzprothesenzahns **A3** in einer realen Referenzhalterung **A1** und/oder mindestens eines virtuellen vorkonfektionierten Referenzprothesenzahns **vA3,** optional in einer virtuellen Referenzhalterung **vA1,** wobei die digitalen Korrekturfaktoren in eine digitale Datenverarbeitungsvorrichtung eingelesen werden, und
(i) die bereitgestellten, digitalen Translations(x,y,z)-Daten und/oder digitalen Daten der Rotation der äußeren Form des mindestens einen virtuellen oder realen vorkonfektionierten Prothesenzahns in Bezug auf die Referenzanordnung **A,** d.h. der räumlichen SOLL-Anordnung in Form von Translations(x,y,z)-Daten und/oder Daten der Rotation der äußeren Form des mindestens einen vorkonfektionierten Prothesenzahns,
(ii) um die Translations(x,y,z)-Daten und/oder Daten der Rotation der äußeren Form des mindestens einen realen vorkonfektionierten Prothesenzahns in der Halterung korrigiert werden, und
(iii) Erhalten eines individualisierten Datensatzes der Halterung enthaltend mindestens einen fixierten realen vorkonfektionierten Prothesenzahn.

Ebenso Gegenstand der Erfindung ist die Verwendung eines individualisierten Datensatzes, insbesondere Erhalten durch Berücksichtigung von digitalen Korrekturfaktoren basierend auf der räumlichen Anordnung des mindestens einen realen vorkonfektionierten Prothesenzahns in der Halterung, umfassend die digitalen Translations(x,y,z)-Daten und/oder die digitalen Daten der Rotation des mindestens einen virtuellen oder realen vorkonfektionierten Prothesenzahns zur abtragenden Bearbeitung des mindestens einen realen vorkonfektionierten Prothesenzahns in der Halterung, insbesondere der gleichen Halterung, mit einer Anschlussgeometrie zum Festlegen der Halterung an einer CAM-Maschine.

Gleichfalls Gegenstand der Erfindung sind digitale Korrekturfaktoren der räumlichen Anordnung des mindestens einen realen vorkonfektionierten Prothesenzahns in der Halterung in Bezug auf eine Referenzanordnung **A** mindestens eines entsprechenden realen vorkonfektionierten Referenzprothesenzahns **A3** in einer Referenzhalterung **A1** der Halterung oder mindestens eines virtuellen vorkonfektionierten Referenzprothesenzahns **vA3,** optional in einer virtuellen Referenzhalterung **vA1** der Halterung, insbesondere zur koronalen und/oder apikalen Bearbeitung des Prothesenzahns. Vorzugsweise zur materialabtragenden Bearbeitung, wie Fräsen, Schleifen, Polieren, Bohren, Scheiden, Schaben, des mindestens einen realen vorkonfektionierten Prothesenzahns, insbesondere in der Halterung zur Verwendung in einem materialabtragenden Verfahren, wobei der Halterung eine Anschlussgeometrie zum Festlegen der Halterung an einer CAM-Maschine zugeordnet ist.

Vorzugsweise sind die Korrekturfaktoren (i) als digitale Korrekturfaktoren in Form eines Barcodes oder eines Quick-Response Codes gespeichert oder (ii) als **scannbare** Korrekturfaktoren grafisch wiedergegeben. Bevorzugt sind die Korrekturfaktoren als Barcode oder als Quick-Response Code (QR-Code) an der Halterung, der Verpackung, einem Verpackungsbestandteil oder der Umverpackung angeordnet. Dabei umfassen die Korrekturfaktoren digitale Daten bzw. Informationen zur Abweichung in der räumlichen IST-Anordnung in Form von Translations(x,y,z)-Daten und/oder Daten der Rotation der äußeren Form des mindestens einen realen vorkonfektionierten Prothesenzahns in Bezug auf eine Referenzanordnung **A** (SOLL-Anordnung) des mindestens eines entsprechenden realen vorkonfektionierten Referenzprothesenzahns **A3** in einer Referenzhalterung **A1** und/oder des mindestens einen virtuellen vorkonfektionierten Referenzprothesenzahns **vA3,** optional in einer virtuellen Referenzhalterung **vA1.**

Ferner ist Gegenstand der Erfindung ein Verfahren zur Bestimmung der digitalen Daten mit Informationen zu den Translations(x,y,z)-Daten bzw. x,y,z-Koordinaten und der Daten zur Rotation der jeweiligen äußeren Form des mindestens einen realen Prothesenzahns der Referenzanordnung **A,** indem die äußere Form des mindestens eines entsprechenden realen vorkonfektionierten Referenzprothesenzahns (A3) in einer realen Referenzhalterung **A1** als Referenzanordnung **A** dreidimensional erfasst wird. Vorzugsweise ist der mindestens eine reale vorkonfektionierte Prothesenzahn (3) in der Halterung fixiert, und die jeweilige Zahnachse in einem Winkel von 20° bis 160° zur Ebene der Halterung angeordnet.
Dabei wird die Referenzanordnung **A** mit einem Scanner dreidimensional erfasst und dreidimensionale Informationen zur Anordnung der äußeren Form, insbesondere als Translations(x,y,z)-Daten und/oder Daten der Rotation, des mindestens einen realen vorkonfektionierten Prothesenzahns in der Halterung digital erfasst, und digitale Daten mit Informationen der räumlichen Anordnung der Referenzanordnung **A** werden erhalten.

Ebenso Gegenstand der Erfindung ist die Verwendung der digitalen Daten mit Informationen der räumlichen Anordnung der Referenzanordnung A zur Ermittlung von Korrekturfaktoren oder digitalen Korrekturfaktoren zur koronalen und/oder apikalen Bearbeitung, insbesondere zur materialabtragenden Bearbeitung, des mindestens einen realen vorkonfektionierten Prothesenzahns in der Halterung zur Verwendung in einem materialabtragenden Verfahren, wobei der Halterung eine Anschlussgeometrie zum Festlegen der Halterung an einer CAM-Maschine zugeordnet ist.

Das Material des Formkörpers, der Formkörper oder der Klemmbacken kann ausgewählt sein aus einem polymeren Material, gefülltem polymeren Material, einem faserverstärktem Polymer, Hybridmaterial, wobei das polymere Material ausgewählt sein kann aus Fluorpolymeren, Polysulfid enthaltenden Polymeren, Polysulfon enthaltenden Polymeren, Polyaryletherketonen, Polyimiden, PAEK (Polyaryletherketonen), PEEK (Polyetheretherketonen), PEK (Polyetherketonen), PEKK (Polyetherketonketonen), PEEEK (Polyetheretheretherketonen), PEEKK (Polyetheretherketonketonen), PEKEKK (Polyetherketonetherketonketonen); PES (Polyethersulfonen), PPSU (Polyphenylensulfonen), Polyarylsulfonen, PSU (Polysulfonen), PPS (Polyphenylensulfid), PFA (Perfluoralkoxy-Polymeren), PFE (Poly(fluorenylen ethynylen)-Polymeren), PVDF (Polyvinylidenfluorid), PTFE (Polytetrafluoroethylen), PAI (Polyamidimiden), PI (Polyimiden), PEI (Polyetherimiden), PBI (Polybenz-imidazolen).

Die Erfindung wird anhand der Figuren näher erläutert, ohne die Erfindung auf diese Ausführungsbeispiele zu begrenzen.

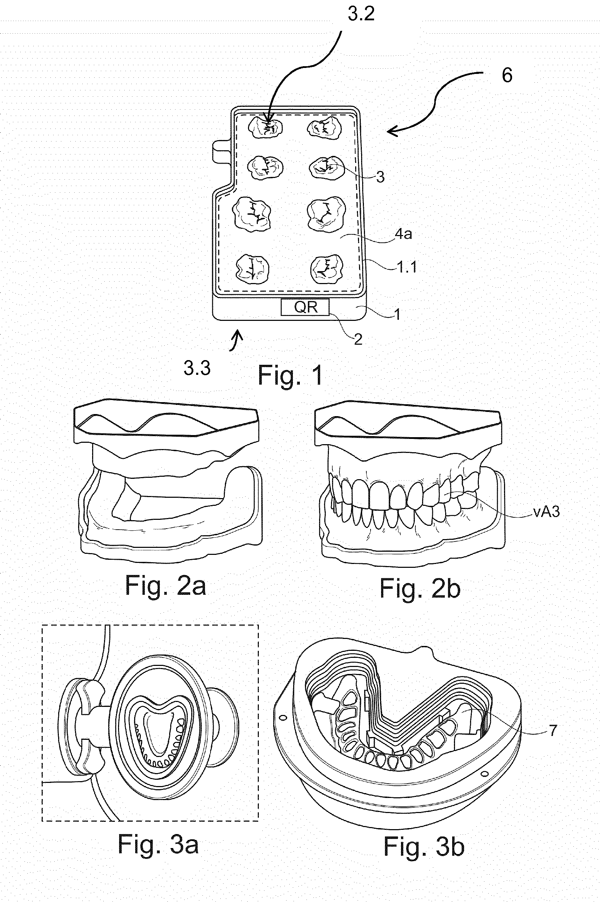

Die Figuren stellen dar: **Fig. 1****:** Eine Halterung **1** mit realer Anordnung **6** mit einer Ebene **1.1,** in der ein flächiger dreidimensionaler Formkörper **4a** angeordnet ist, in dem 8 reale vorkonfektionierte Prothesenzähne **3** fixiert sind. Auf die Halterung **1** sind die Korrekturfaktoren **2** in Form eines QR-Codes aufgedruckt.

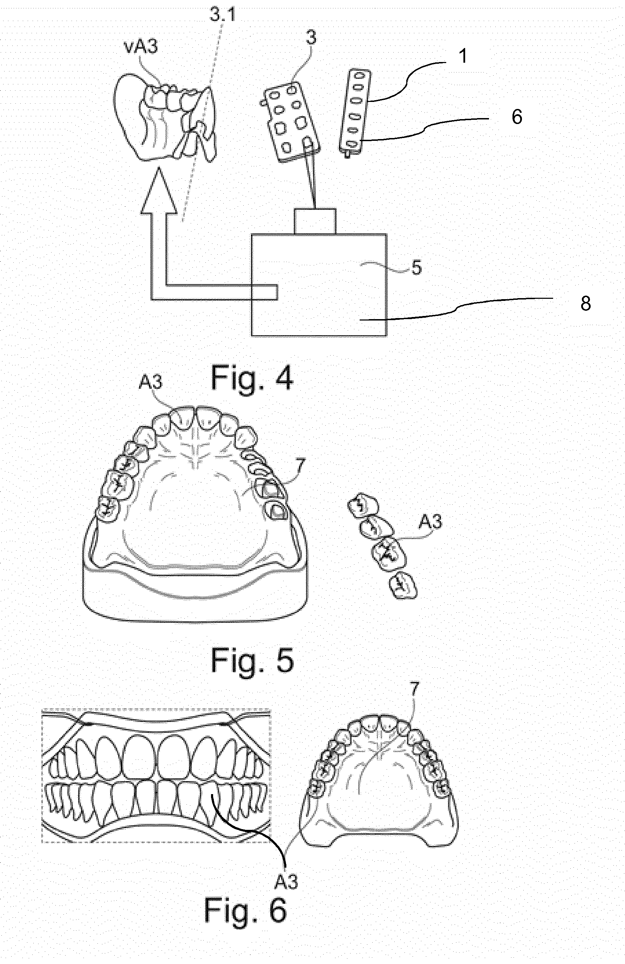

Die **Figuren 2a** und **2b** zeigen ein virtuelles Modell eines zahnlosen Kiefers zur Simulation der Okklusion der virtuellen vorkonfektionierten Referenzprothesenzähne **vA3** in einer virtuellen Prothesenbasis. In den **Figuren 3a** und **3b** ist die Herstellung einer realen Prothesenbasis **7** in einem CAM-Verfahren aus den digitalen Daten der virtuellen Prothesenbasis dargestellt, an der die realen vorkonfektionierten Referenzprothesenzähne **A3** und optional bearbeiteten Prothesenzähne **A3** später angebracht werden. **Figur 4** zeigt schematisch das Scannen der Halterung **1** mit einem Scanner **5** zur digitalen Erfassung der dreidimensionalen Informationen der Anordnung der äußeren Form der acht oder fünf realen vorkonfektionierten Prothesenzähne **3** in der Halterung **1.** Dabei werden digitale Informationen der räumlichen, realen Anordnung **6** der realen Prothesenzähne **3** erhalten. Anschließend werden die digitalen Informationen der realen Anordnung **6** mit den digitalen Daten mit Informationen der räumlichen Anordnung der Referenzanordnung **A** (Verfahrensschritt und Referenzanordnung wurden nicht separat dargestellt) mindestens eines entsprechenden realen vorkonfektionierten Referenzprothesenzahns **A3** in einer realen Referenzhalterung **A1** der Halterung **1** oder des mindestens einen virtuellen vorkonfektionierten Referenzprothesenzahns **vA3** mit Zahnachse **3.1** optional in einer virtuellen Referenzhalterung **vA1** der Halterung **1** verglichen (Verfahrensschritt nicht dargestellt) und die digitale Korrekturfaktoren **2** in Bezug zu den Daten Referenzanordnung **A** bestimmt. Auf diese Weise können die Korrekturfaktoren ermittelt werden. Anhand dieser Korrekturfaktoren können die digitalen Daten der an den jeweiligen Patienten anzupassenden vorkonfektionierten Zähne an die Ausgangssituation in der Halterung angepasst werden, so dass auf diese Weise direkt mit dem korrekten Ausgangsdatensatz die automatisierte Bearbeitung der vorkonfektionierten Zähne in einem CAM-Verfahren erfolgen kann. In den Verfahren nach dem Stand der Technik musste die Ausgangssituation entweder zuvor manuell beim Anwender ermittelt werden oder die vorkonfektionierten Zähne wurden unter Zugrundelegung der Referenzanordnung bearbeitet, so dass eine Abweichung von der Referenzanordnung erst gar nicht berücksichtigt wurde. Ohne Berücksichtigung der Abweichung sind die Passgenauigkeit der prothetischen Versorgung und die Okklusion der Zähne nicht gewährleistet.

**Figur 5** zeigt eine Prothesenbasis **7** mit eingesteckten, mit den erfindungsgemäßen Korrekturfaktoren bearbeitete vorkonfektionierte Prothesenzähne **A3** zur Einprobung am Patienten. **Figur 6** zeigt entsprechende fertige Prothesenbasen **7** mit vorkonfektionierten Zähnen außerhalb und im Patientenmund.

### Bezugszeichen:

- **A**: Referenzanordnung (nicht dargestellt)
- **A1**: reale Referenzhalterung der Halterung **1** mit reale vorkonfektionierten Prothesenzähnen (nicht dargestellt)
- **A3**: realer vorkonfektionierter Referenzprothesenzahn
- **vA1**: virtuelle Referenzhalterung der Halterung **1** virtueller vorkonfektionierter Prothesenzähne (nicht dargestellt)
- **vA3**: virtuelle vorkonfektionierte Referenzprothesenzähne
- **1**: Halterung, **1.1** Ebene der Halterung **(1)**
- **2**: Korrekturfaktoren für die räumliche, reale Anordnung (6) des mindestens einen realen vorkonfektionierten Prothesenzahns (3) in Bezug auf eine Referenzanordnung (A), insbesondere digitale Korrekturfaktoren als Informationen, insbesondere digitale Daten mit Informationen
- **3**: realer vorkonfektionierter Prothesenzahn, **vA3** virtueller vorkonfektionierter Referenzprothesenzahn,
- **3.1**: Zahnachse
- **3.2**: koronal
- **3.3**: apikal
- **4a**: dreidimensionaler, flächiger Formkörper
- **4b**: Klemmelemente (nicht dargestellt)
- **5**: Scanner
- **6**: reale Anordnung
- **7**: Prothesenbasis
- **8**: individualisierter Datensatz

## Patentansprüche

1. Halterung (1) zur Verwendung in einem digital gesteuerten Material abtragenden Verfahren, enthaltend mindestens einen fixierten realen vorkonfektionierten Prothesenzahn (3),
**dadurch gekennzeichnet, dass**
die Halterung (1) eine Ebene (1.1) aufweist, in der mindestens ein flächiger dreidimensionaler Formkörper (4a) angeordnet ist, oder die Halterung (1) eine Ebene (1.1) aufweist, in der mindestens zwei Klemmelemente (4b) angeordnet sind, wobei in dem Formkörper (4a) oder zwischen den Klemmelementen (4b) mindestens ein realer vorkonfektionierter Prothesenzahn (3) fixiert ist,
wobei die Zahnachse (3.1) des mindestens einen vorkonfektionierten Prothesenzahns in einem Winkel von 20° bis 160° zur Ebene (1.1) der Halterung (1) angeordnet ist, so dass der mindestens eine reale vorkonfektionierte Prothesenzahn (3) von koronal (3.2) und/oder von apikal (3.3) in einem Material abtragenden Verfahren bearbeitet werden kann, und der Halterung (1) digitale oder scannbare Korrekturfaktoren (2) für die räumliche, reale Anordnung (6) des mindestens einen realen vorkonfektionierten Prothesenzahns (3) in Bezug auf eine Referenzanordnung (A) umfassend mindestens einen entsprechenden realen vorkonfektionierten Referenzprothesenzahn (A3) in einer realen Referenzhalterung (A1) der Halterung (1) oder mindestens einen virtuellen vorkonfektionierten Referenzprothesenzahn (vA3), optional in einer virtuellen Referenzhalterung (vA1) der Halterung (1), zugeordnet sind, wobei die digitalen oder scannbaren Korrekturfaktoren (2) Translations(x,y,z)-Daten und optional die Daten der Rotation der jeweiligen äußeren Form des jeweiligen realen vorkonfektionierten Prothesenzahns (3) in der IST-Anordnung zur SOLL-Anordnung, d.h. der Referenzanordnung (A), bilden.

2. Halterung (1) nach Anspruch 1, **dadurch gekennzeichnet, dass** die digitalen oder scannbaren Korrekturfaktoren (2) (i) als digitale Korrekturfaktoren in Form eines Barcodes oder eines Quick-Response Codes gespeichert sind oder (ii) als scannbare Korrekturfaktoren grafisch wiedergegeben sind, insbesondere als Barcode oder als Quick-Response Code (QR-Code) der Halterung (1) zugeordnet oder an der Halterung angeordnet sind.

3. Halterung (1) nach Anspruch 1 oder 2, **dadurch gekennzeichnet,**
**dass** die digitalen oder scannbaren Korrekturfaktoren (2) digitale Daten mit Informationen zur Abweichung in der räumlichen IST-Anordnung in Form von Translations(x,y,z)-Daten und/oder der Rotation des mindestens einen realen vorkonfektionierten Prothesenzahns (3) in Bezug auf eine Referenzanordnung (A), mindestens eines entsprechenden realen vorkonfektionierten Referenzprothesenzahns (A3) in einer realen Referenzhalterung (A1) und/oder eines virtuellen vorkonfektionierten Referenzprothesenzahns (vA3), optional in einer virtuellen Referenzhalterung (vA1), enthalten.

4. Halterung (1) nach einem der Ansprüche 1 oder 3, **dadurch gekennzeichnet, dass** in dem Formkörper (4a) oder zwischen den Klemmelementen (4b) mindestens zwei reale vorkonfektionierte Prothesenzähne (3) fixiert sind, wobei die jeweilige Zahnachse (3.1) der Prothesenzähne in einem Winkel von 20° bis 160° zur Ebene (1.1) der Halterung (1) angeordnet sind, und die mindestens zwei realen vorkonfektionierten Prothesenzähne (3) von koronal (3.2) und/oder von apikal (3.3) in einem materialabtragenden Verfahren bearbeitbar sind, und wobei der Halterung (1) digitale oder scannbare Korrekturfaktoren (2) für die räumliche, reale Anordnung der mindestens zwei realen vorkonfektionierten Prothesenzähne (3) in Bezug auf eine Referenzanordnung (A) der entsprechenden realen vorkonfektionierten Referenzprothesenzähne (A3) in einer realen Referenzhalterung (A1) oder entsprechender virtueller vorkonfektionierten Referenzprothesenzähne (vA3), optional in einer virtuellen Referenzhalterung (vA1), zugeordnet sind.

5. Halterung (1) nach einem der Ansprüche 1 bis 4, **dadurch gekennzeichnet, dass** die digitalen oder scannbaren Korrekturfaktoren (2) Informationen, insbesondere digitale Daten mit Informationen, zur Abweichung in der räumlichen Anordnung in Form von Translations(x,y,z)-Daten und/oder zur Rotation der jeweiligen äußeren Form aller in der Halterung angeordneten realen vorkonfektionierten Prothesenzähne (i) in Bezug auf die Informationen in einem Datensatz mit Daten zur äußeren Form entsprechender Prothesenzähne in einer realen Referenzhalterung (A1) und/oder (ii) in Bezug auf die Informationen in einem weiteren Datensatz mit Daten zur äußeren Form der entsprechenden virtuellen vorkonfektionierte Referenzprothesenzähne (vA3), optional in einer virtuellen Referenzhalterung (vA1) aufweisen.

6. Halterung (1) nach einem der Ansprüche 1 bis 5, **dadurch gekennzeichnet, dass** der eine oder die mindestens zwei realen Prothesenzähne in dem Material des Formkörpers (4a) derart fixiert sind, dass die Zahnachse (3.1) des einen oder der mindestens zwei Prothesenzähne in einem Winkel von 20° bis 160° zur Ebene (1.1) der Halterung (1) angeordnet ist.

7. Halterung (1) nach einem der Ansprüche 1 bis 6, **dadurch gekennzeichnet, dass**
a) das Material des mindestens einen flächigen dreidimensionalen Formkörpers (4a) Wachs, Kunststoff oder ein Hybridmaterial ist,
b) die mindestens zwei Klemmelemente (4b) den mindestens einen realen vorkonfektionierten Prothesenzahn (3) oder die mindestens zwei realen vorkonfektionierten Prothesenzähne (3) im Bereich ihres jeweiligen mittleren äußeren Umfangs zumindest bereichsweise umschließen, wobei vorzugsweise die Klemmelemente (4b) Ausnehmungen aufweisen, deren Innenflächen zumindest bereichsweise formschlüssig zu Bereichen im Bereich des mittleren äußeren Umfangs der Prothesenzähne passen.

8. Verfahren zur Bestimmung der digitalen oder scannbaren Korrekturfaktoren (2) der räumlichen Anordnung des mindestens einen realen vorkonfektionierten Prothesenzahns (3) in einer Halterung (1) nach einem der Ansprüche 1 bis 7, in Bezug auf eine Referenzanordnung (A) mindestens eines entsprechenden realen vorkonfektionierten Referenzprothesenzahns (A3) in einer realen Referenzhalterung (A1) oder mindestens eines virtuellen vorkonfektionierten Referenzprothesenzahns (vA3), optional in einer virtuellen Referenzhalterung (vA1), indem
- die Halterung (1) mit der Ebene (1.1), in der mindestens ein flächiger dreidimensionaler Formkörper (4a) angeordnet ist, wobei in dem Formkörper (4a) mindestens ein realer vorkonfektionierter Prothesenzahn (3) fixiert ist, dessen Zahnachse (3.1) in einem Winkel von 20° bis 160° zur Ebene (1.1) der Halterung (1) angeordnet ist, oder
- die Halterung (1) mit der Ebene (1.1), in der mindestens zwei Klemmelemente (4b) derart angeordnet sind, wobei zwischen den Klemmelementen (4b) mindestens ein realer vorkonfektionierter Prothesenzahn (3) fixiert ist, dessen Zahnachse (3.1) in einem Winkel von 20° bis 160° zur Ebene (1.1) der Halterung (1) angeordnet ist,
- mit einem Scanner (5) die dreidimensionalen Informationen zur Anordnung der äußeren Form des mindestens einen realen vorkonfektionierten Prothesenzahns (3) in der Halterung (1) digital erfasst werden, und digitale Informationen der räumlichen, realen Anordnung (6) erhalten werden,
- die digitalen Informationen der realen Anordnung (6) mit den digitalen Daten mit Informationen der räumlichen Anordnung der Referenzanordnung (A) mindestens eines entsprechenden realen vorkonfektionierten Referenzprothesenzahns (A3) in einer realen Referenzhalterung (A1) der Halterung (1) oder des mindestens einen virtuellen vorkonfektionierten Referenzprothesenzahns (vA3), optional in einer virtuellen Referenzhalterung (vA1) der Halterung (1),
verglichen werden,
- digitale Korrekturfaktoren (2) in Bezug zu den Daten der Referenzanordnung (A) bestimmt werden, und
- die digitalen oder scannbaren Korrekturfaktoren (2) ermittelt werden, wobei die digitalen oder scannbaren Korrekturfaktoren (2) Translations(x,y,z)-Daten und optional die Daten der Rotation der jeweiligen äußeren Form des jeweiligen realen vorkonfektionierten Prothesenzahns (3) in der IST-Anordnung zur SOLL-Anordnung, d.h. der Referenzanordnung (A), bilden.

9. Verfahren nach Anspruch 8, **dadurch gekennzeichnet, dass** die digitalen oder scannbaren Korrekturfaktoren als Barcode oder als Quickresponse (QR-Code) der Halterung (1) zugeordnet oder an der Halterung (1) angebracht werden.

10. Verwendung von digitalen oder scannbaren Korrekturfaktoren zur koronalen (3.2) und/oder apikalen (3.3) materialabtragenden Bearbeitung mindestens eines realen vorkonfektionierten Prothesenzahns in einer Halterung (1) nach einem der Ansprüche 1 bis 7 zur Verwendung in einem materialabtragenden Verfahren, wobei der Halterung eine Anschlussgeometrie zum Festlegen der Halterung (1) an einer CAM-Maschine zugeordnet ist, wobei die digitalen oder scannbaren Korrekturfaktoren (2) Translations(x,y,z)-Daten und optional die Daten der Rotation der jeweiligen äußeren Form des jeweiligen realen vorkonfektionierten Prothesenzahns (3) in der IST-Anordnung zur SOLL-Anordnung, d.h. der Referenzanordnung (A), bilden.

11. Verwendung nach Anspruch 10, wobei die digitalen oder scannbaren Korrekturfaktoren (2) umfassend Informationen zur Abweichung in der räumlichen IST-Anordnung in Form von Translations(x,y,z)-Daten bzw. x,y,z-Koordinaten und/oder Daten der Rotation der jeweiligen äußeren Form des jeweiligen mindestens einen realen vorkonfektionierten Prothesenzahns (3) in Bezug auf eine Referenzanordnung (A), mindestens eines entsprechenden realen vorkonfektionierten Referenzprothesenzahns (A3) in einer realen Referenzhalterung (A1) und/oder mindestens eines virtuellen vorkonfektionierten Referenzprothesenzahns (vA3),
optional in einer virtuellen Referenzhalterung (vA1),
in eine digitale Datenverarbeitungsvorrichtung eingelesen werden, und
(i) bereitgestellte, digitale Translations(x,y,z)-Daten und/oder digitalen Daten der Rotation des mindestens einen virtuellen oder realen vorkonfektionierten Prothesenzahns (3) in Bezug auf die Referenzanordnung (A),
(ii) um die Translations(x,y,z)-Daten und/oder Daten der Rotation des mindestens einen realen vorkonfektionierten Prothesenzahns (3) in der Halterung (1) korrigiert werden,
und
(iii) Erhalten eines individualisierten Datensatzes der Halterung (1) enthaltend mindestens einen fixierten realen vorkonfektionierten Prothesenzahn (3).

12. Verwendung eines individualisierten Datensatzes (8) erhalten durch Berücksichtigung von digitalen oder scannbaren Korrekturfaktoren (2) basierend auf der räumlichen Anordnung des mindestens einen realen vorkonfektionierten Prothesenzahns (3) in einer Halterung (1) nach einem der Ansprüche 1 bis 7,
umfassend die digitalen Translations(x,y,z)-Daten und/oder die digitalen Daten der Rotation des mindestens einen virtuellen oder realen vorkonfektionierten Prothesenzahns (3) zur abtragenden Bearbeitung des mindestens einen realen vorkonfektionierten Prothesenzahns (3) in der Halterung (1) mit einer Anschlussgeometrie zum Festlegen der Halterung (1) an einer CAM-Maschine, wobei die digitalen oder scannbaren Korrekturfaktoren (2) Translations(x,y,z)-Daten und optional die Daten der Rotation der jeweiligen äußeren Form des jeweiligen realen vorkonfektionierten Prothesenzahns (3) in der IST-Anordnung zur SOLL-Anordnung, d.h. der Referenzanordnung (A), bilden.

13. Verfahren zur Bestimmung der digitalen Daten mit Informationen zu Translations(x,y,z)-Daten bzw. x,y,z-Koordinaten und zur Rotation der jeweiligen äußeren Form mindestens eines realen Prothesenzahns der Referenzanordnung (A), indem die äußere Form des mindestens einen entsprechenden realen vorkonfektionierten Referenzprothesenzahns (A3) in einer realen Referenzhalterung (A1) als Referenzanordnung (A) erfasst wird,
- indem die Referenzanordnung (A) mit einem Scanner (5) dreidimensional erfasst wird und dreidimensionale Informationen zur Anordnung der äußeren Form des mindestens einen realen vorkonfektionierten Prothesenzahns (3) in der Halterung (1) nach einem der Ansprüche 1 bis 7 digital erfasst wird, und die digitalen Daten mit Informationen der räumlichen Anordnung der Referenzanordnung (A) erhalten werden.

14. Verwendung der digitalen Daten mit Informationen der räumlichen Anordnung der Referenzanordnung (A) zur Ermittlung von digitalen oder scannbaren Korrekturfaktoren zur koronalen (3.2) und/oder apikalen (3.3) Bearbeitung des mindestens einen realen vorkonfektionierten Prothesenzahns in einer Halterung (1) nach einem der Ansprüche 1 bis 7 zur Verwendung in einem materialabtragenden Verfahren, wobei der Halterung eine Anschlussgeometrie zum Festlegen der Halterung (1) an einer CAM-Maschine zugeordnet ist.

## Claims

1. Mounting (1) for use in a digitally controlled material-removing process, containing at least one fixed real prefabricated prosthetic tooth (3),
**characterised in that**
the mounting (1) has a plane (1.1) in which at least one flat three-dimensional moulded body (4a) is arranged, or the mounting (1) has a plane (1.1) in which at least two clamping elements (4b) are arranged, at least one real prefabricated prosthetic tooth (3) being fixed in the moulded body (4a) or between the clamping elements (4b), the tooth axis (3.1) of the at least one prefabricated prosthetic tooth being arranged at an angle of 20° to 160° to the plane (1.1) of the mounting (1), so that the at least one real prefabricated prosthetic tooth (3) may be processed from coronal (3.2) and/or from apical (3.3) in a material-removing process, and digital or scannable correction factors (2) being assigned to the mounting (1) for the spatial, real arrangement (6) of the at least one prefabricated prosthetic tooth (3) in relation to a reference arrangement (A) comprising at least one corresponding real prefabricated reference prosthetic tooth (A3) in a real reference mounting (A1) of the mounting (1) or at least one virtual prefabricated reference prosthetic tooth (vA3), optionally in a virtual reference mounting (vA1) of the mounting (1), the digital or scannable correction factors (2) forming translation (x,y,z) data and optionally the data of rotation of the respective outer shape of the respective real prefabricated prosthetic tooth (3) in the ACTUAL arrangement to the TARGET arrangement, i.e. the reference arrangement (A).

2. Mounting (1) according to claim 1, **characterised in that** the digital or scannable correction factors (2) (i) are stored as digital correction factors in the form of a bar code or quick-response code or (ii) are graphically reproduced as scannable correction factors, in particular are assigned to the mounting (1) or are arranged on the mounting as bar code or as quick-response code (QR code).

3. Mounting (1) according to claim 1 or 2, **characterised in**
**that** the digital or scannable correction factors (2) contain digital data having information on deviation in the spatial ACTUAL arrangement in the form of translation (x,y,z) data and/or of rotation of the at least one real prefabricated prosthetic tooth (3) in relation to a reference arrangement (A), of at least one corresponding real prefabricated reference prosthetic tooth (A3) in a real reference mounting (A1) and/or of a virtual prefabricated reference prosthetic tooth (vA3), optionally in a virtual reference mounting (vA1).

4. Mounting (1) according to any one of the claims 1 or 3, **characterised in that** at least two real prefabricated prosthetic teeth (3) are fixed in the moulded body (4a) or between the clamping elements (4b), the respective tooth axis (3.1) of the prosthetic teeth being arranged at an angle of 20° to 160° to the plane (1.1) of the mounting (1), and the at least two real prefabricated prosthetic teeth (3) being processible from coronal (3.2) and/or from apical (3.3) in a material-removing process, and digital or scannable correction factors (2) being assigned to the mounting (1) for the spatial, real arrangement of the at least two prefabricated prosthetic teeth (3) in relation to a reference arrangement (A) of the corresponding real prefabricated reference prosthetic teeth (A3) in a real reference mounting (A1) or of corresponding virtual prefabricated reference prosthetic teeth (vA3), optionally in a virtual reference mounting (vA1).

5. Mounting (1) according to any one of the claims 1 to 4, **characterised in that** the digital or scannable correction factors (2) have information, in particular digital data with information, on deviation in the spatial arrangement in the form of translation (x,y,z) data and/or on rotation of the respective outer shape of all the real prefabricated prosthetic teeth arranged in the mounting,
(i) in relation to the information in a data set having data on the outer shape of corresponding prosthetic teeth in a real reference mounting (A1), and/or
(ii) in relation to the information in a further data set having data on the outer shape of the corresponding virtual prefabricated reference prosthetic teeth (vA3), optionally in a virtual reference mounting (vA1).

6. Mounting (1) according to any one of the claims 1 to 5, **characterised in that** the one or the at least two real prosthetic teeth are fixed in the material of the moulded body (4a) such that the tooth axis (3.1) of the one or of the at least two prosthetic teeth is arranged at an angle of 20° to 160° to the plane (1.1) of the mounting (1).

7. Mounting (1) according to any one of the claims 1 to 6, **characterised in that**
a) the material of the at least one flat three-dimensional moulded body (4a) is wax, plastic or a hybrid material,
b) the at least two clamping elements (4b) enclose, at least area by area, the at least one real prefabricated prosthetic tooth (3) or the at least two real prefabricated prosthetic teeth (3) in the area of their respective central outer periphery, the clamping elements (4b) preferably having recesses, the inner surfaces of which fit, at least area by area, to areas in the area of the central outer periphery of the prosthetic teeth in a form-fitting manner.

8. Method for determining the digital or scannable correction factors (2) of the spatial arrangement of the at least one real prefabricated prosthetic tooth (3) in a mounting (1) according to any one of claims 1 to 7, in relation to a reference arrangement (A) of at least one corresponding real prefabricated reference prosthetic tooth (A3) in a real reference mounting (A1) or of at least one virtual prefabricated reference prosthetic tooth (vA3), optionally in a virtual reference mounting (vA1), in which
- the mounting (1) with the plane (1.1) in which at least one flat three-dimensional moulded body (4a) is arranged, at least one real prefabricated prosthetic tooth (3) being fixed in the moulded body (4a), the tooth axis (3.1) of which is arranged at an angle of 20° to 160° to the plane (1.1) of the mounting (1), or
- the mounting (1) with the plane (1.1) in which at least two clamping elements (4b) are arranged such, at least one real prefabricated prosthetic tooth (3) being fixed between the clamping elements (4b), the tooth axis (3.1) of which is arranged at an angle of 20° to 160° to the plane (1.1) of the mounting (1),
- the three-dimensional information on arrangement of the outer shape of the at least one real prefabricated prosthetic tooth (3) in the mounting (1) are digitally captured by means of a scanner (5), and digital information on the spatial, real arrangement (6) are obtained,
- the digital information on the real arrangement (6) are compared with the digital data having information on the spatial arrangement of the reference arrangement (A) of at least one corresponding real prefabricated reference prosthesis tooth (A3) in a real reference mounting (A1) of the mounting (1) or of the at least one virtual prefabricated reference prosthesis tooth (vA3), optionally in a virtual reference mounting (vA1) of the mounting (1),
- digital correction factors (2) are determined in relation to the data of the reference arrangement (A), and
- the digital or scannable correction factors (2) are determined, the digital or scannable correction factors (2) forming translation (x,y,z) data and optionally the data of rotation of the respective outer shape of the respective real prefabricated prosthetic tooth (3) in the ACTUAL arrangement to the TARGET arrangement, i.e. the reference arrangement (A).

9. Method according to claim 8, **characterised in that** the digital or scannable correction factors are assigned to the mounting (1) or are arranged on the mounting (1) as barcode or as quick-response code (QR code).

10. Use of digital or scannable correction factors for coronal (3.2) and/or apical (3.3) material-removing processing of at least one real prefabricated prosthetic tooth in a mounting (1) according to any one of the claims 1 to 7 for use in a material-removing process, a connection geometry for fastening the mounting (1) to a CAM machine being assigned to the mounting, the digital or scannable correction factors (2) forming translation (x,y,z) data and optionally the data of rotation of the respective outer shape of the respective real prefabricated prosthetic tooth (3) in the ACTUAL arrangement to the TARGET arrangement, i.e. the reference arrangement (A).

11. Use according to claim 10, wherein the digital or scannable correction factors (2) comprising information on deviation in the spatial ACTUAL arrangement in the form of translation (x,y,z) data, or x,y,z coordinates, respectively, and/or data of rotation of the respective outer shape of the respective at least one real prefabricated prosthetic tooth (3) in relation to a reference arrangement (A), of at least one corresponding real prefabricated reference prosthetic tooth (A3) in a real reference mounting (A1) and/or of at least one virtual prefabricated reference prosthetic tooth (vA3),
optionally in a virtual reference mounting (vA1),
are read into a digital data processing apparatus, and
(i) digital translation (x,y,z) data provided and/or digital data of rotation provided of the at least one virtual or real prefabricated prosthetic tooth (3) in relation to the reference arrangement (A),
(ii) are corrected for the translation (x,y,z) data and/or data of rotation of the at least one real prefabricated prosthetic tooth (3) in the mounting (1), and
(iii) obtaining an individualized data set of the mounting (1) containing at least one fixed real prefabricated prosthetic tooth (3).

12. Use of an individualized data set (8) obtained by consideration of digital or scannable correction factors (2) based on the spatial arrangement of the at least one real prefabricated prosthetic tooth (3) in a mounting (1) according to any one of the claims 1 to 7,
comprising the digital translation (x,y,z) data and/or the digital data of rotation of the at least one virtual or real prefabricated prosthetic tooth (3) for removing processing of the at least one real prefabricated prosthetic tooth (3) in the mounting (1) having a connection geometry for fastening the mounting (1) to a CAM machine, the digital or scannable correction factors (2) forming translation (x,y,z) data and optionally the data of rotation of the respective outer shape of the respective real prefabricated prosthetic tooth (3) in the ACTUAL arrangement to the TARGET arrangement, i.e. the reference arrangement (A).

13. Method for determining digital data having information on translation (x,y,z) data or x,y,z coordinates, respectively, and on rotation of the respective outer shape of at least one real prosthetic tooth of the reference arrangement (A), by capturing the outer shape of the at least one corresponding real prefabricated reference prosthetic tooth (A3) in a real reference mounting (A1) as reference arrangement (A),
- by capturing the reference arrangement (A) in a three-dimensional manner by means of a scanner (5) and by capturing three-dimensional information on arrangement of the outer shape of the at least one real prefabricated prosthetic tooth (3) in the mounting (1) according to any one of the claims 1 to 7 in a digital manner, and by obtaining the digital data having information on the spatial arrangement of the reference arrangement (A).

14. Use of the digital data having information on the spatial arrangement of the reference arrangement (A) for determining digital or scannable correction factors for coronal (3.2) and/or apical (3.3) processing of the at least one real prefabricated prosthetic tooth in a mounting (1) according to any one of the claims 1 to 7 for use in a material-removing process, a connection geometry for fastening the mounting (1) to a CAM machine being assigned to the mounting.

## Revendications

1. Montage (1) pour utilisation dans un procédé contrôlé numériquement à enlever de la matière, contenant au moins une dent prothétique préfabriquée réelle (3) fixée, **caractérisé en ce que**
le montage (1) a un plan (1.1) dans lequel au moins un corps moulé (4a) tridimensionnel plat est arrangé, ou le montage (1) a un plan (1.1) dans lequel au moins deux éléments de serrage (4b) sont arrangés, au moins une dent prothétique préfabriquée réelle (3) étant fixée dans le corps moulé (4a) ou entre les éléments de serrage (4b),
l'axe de dent (3.1) de l'au moins une dent prothétique préfabriquée étant arrangée à un angle de 20° à 160° au plan (1.1) du montage (1), de sorte que l'au moins une dent prothétique préfabriquée réelle (3) peut être traitée de coronal (3.2) et/ou d'apical (3.3) dans un procédé à enlever de la matière, et des facteurs de correction numériques ou scannables (2) étant assignés au montage (1) pour l'arrangement spatial réel (6) de l'au moins une dent prothétique préfabriquée (3) par rapport à un arrangement de référence (A) comprenant au moins une dent de référence prothétique préfabriquée réelle (A3) correspondante dans un montage de référence réel (A1) du montage (1) ou au moins une dent de référence prothétique préfabriquée virtuelle (vA3), facultativement dans un montage de référence virtuel (vA1) du montage (1), les facteurs de correction numériques ou scannables (2) formant des données de translation (x,y,z) et facultativement les données de la rotation de la forme extérieure respective de la dent prothétique préfabriquée réelle (3) respective dans l'arrangement ACTUEL à l'arrangement SOUHAITÈ, c.-à-d. l'arrangement de référence (A).

2. Montage (1) selon la revendication 1, **caractérisé en ce que** les facteurs de correction numériques ou scannables (2) (i) sont mémorisés en tant que facteurs de correction numériques sous la forme d'un code à barres ou code à réponse rapide ou (ii) sont reproductibles graphiquement en tant que facteurs de correction scannables, en particulier sont assignés au montage (1) ou sont arrangés sur le montage en tant que code à barres ou en tant que code à réponse rapide (code QR).

3. Montage (1) selon la revendication 1 ou 2, **caractérisé en ce**
**que** les facteurs de correction numériques ou scannables (2) contiennent des données numériques ayant des informations sur la déviation dans l'arrangement ACTUEL spatial sous la forme des données de translation (x,y,z) et/ou de la rotation de l'au moins une dent prothétique préfabriquée réelle (3) par rapport à un arrangement de référence (A), d'au moins une dent de référence prothétique préfabriquée réelle (A3) correspondante dans un montage de référence réel (A1) et/ou d'au moins une dent de référence prothétique préfabriquée virtuelle (vA3), facultativement dans un montage de référence virtuel (vA1).

4. Montage (1) selon l'une des revendications 1 ou 3, **caractérisé en ce que** au moins deux dents prothétiques préfabriquées réelles (3) sont fixées dans le corps moulé (4a) ou entre les éléments de serrage (4b), l'axe de dent (3.1) des dents prothétiques préfabriquées étant arrangée à un angle de 20° à 160° au plan (1.1) du montage (1), et l'au moins deux dents prothétiques préfabriquées réelles (3) étant traitable de coronal (3.2) et/ou d'apical (3.3) dans un procédé à enlever de la matière, et des facteurs de correction numériques ou scannables (2) étant assignés au montage (1) pour l'arrangement spatial réel de l'au moins deux dents prothétiques préfabriquées réelles (3) par rapport à un arrangement de référence (A) des dents de référence prothétiques préfabriquées réelles (A3) correspondantes dans un montage de référence réel (A1) ou des dents de référence prothétiques préfabriquées virtuelles (vA3) correspondantes, facultativement dans un montage de référence virtuel (vA1).

5. Montage (1) selon l'une des revendications 1 à 4, **caractérisé en ce que** les facteurs de correction numériques ou scannables (2) ont des informations, en particulier des données numériques ayant des informations, sur la déviation dans l'arrangement spatial sous la forme des données de translation (x,y,z) et/ou à la rotation de la forme extérieure respective de toutes les dents prothétiques préfabriquées réelles arrangées dans le montage,
(i) par rapport aux informations dans un ensemble de données ayant des données à la forme extérieure des dents prothétiques correspondantes dans un montage de référence réel (A1), et/ou
(ii) par rapport aux informations dans un autre ensemble de données ayant des données à la forme extérieure des dents de référence prothétiques préfabriquées virtuelles (vA3), facultativement dans un montage de référence virtuel (vA1).

6. Montage (1) selon l'une des revendications 1 à 5, **caractérisé en ce que** l'une ou l'au moins deux dents prothétiques réelles sont fixées dans le matériau du corps moulé (4a) si bien que l'axe de dent (3.1) de l'une ou de l'au moins deux dents prothétiques est arrangé à un angle de 20° à 160° au plan (1.1) du montage (1).

7. Montage (1) selon l'une des revendications 1 à 6, **caractérisé en ce que**
a) le matériau de l'au moins un corps moulé (4a) tridimensionnel plat est la cire, le plastique ou un matériau hybride,
b) les au moins deux éléments de serrage (4b) entourent, au moins zone par zone, l'au moins une dent prothétique préfabriquée réelle (3) ou les au moins deux dents prothétiques préfabriquées réelles (3) dans la zone de leur périphérie extérieure centrale respective, les éléments de serrage (4b) ayant de préférence des encoches, dont les surfaces intérieures convient, au moins zone par zone, à des zones dans la zone de la périphérie extérieure centrale des dents prothétiques en liaison de forme.

8. Procédé pour déterminer les facteurs de correction numériques ou scannables (2) de l'arrangement de l'au moins une dent prothétique préfabriquée réelle (3) dans un montage (1) selon l'une des revendications 1 à 7, par rapport à un arrangement de référence (A) d'au moins une dent de référence prothétique préfabriquée réelle (A3) correspondante dans un montage de référence réel (A1) ou d'au moins une dent de référence prothétique préfabriquée virtuelle (vA3), facultativement dans un montage de référence virtuel (vA1), dans lequel
- le montage (1) avec le plan (1.1), dans lequel au moins un corps moulé (4a) tridimensionnel plat est arrangé, au moins une dent prothétique préfabriquée réelle (3) étant fixée dans le corps moulé (4a), dont l'axe de dent (3.1) est arrangé à un angle de 20° à 160° au plan (1.1) du montage (1), ou
- le montage (1) avec le plan (1.1), dans lequel au moins deux éléments de serrage (4b) sont arrangés si bien, au moins une dent prothétique préfabriquée réelle (3) étant fixée entre les éléments de serrage (4b), dont l'axe de dent (3.1) est arrangé à un angle de 20° à 160° au plan (1.1) du montage (1),
- les informations tridimensionnelles sur l'arrangement de la forme extérieure de l'au moins une dent prothétique préfabriquée réelle (3) dans le montage (1) sont capturés numériquement au moyen d'un scanner (5), et des informations numériques sur l'arrangement réel spatial (6) sont obtenus,
- les informations numériques de l'arrangement réel (6) sont comparés avec les données ayant des informations de l'arrangement spatial de l'arrangement de référence (A) d'au moins une dent de référence prothétique préfabriquées réelle (A3) correspondante dans un montage de référence réel (A1) du montage (1) ou de l'au moins une dent de référence prothétique préfabriquée virtuelle (vA3), facultativement dans un montage de référence virtuel (vA1) du montage (1),
- des facteurs de correction numériques (2) sont déterminés par rapport aux données de l'arrangement de référence (A), et
- les facteurs de correction numériques ou scannables (2) sont déterminés, les facteurs de correction numériques ou scannables (2) formant des données de translation (x,y,z) et facultativement les données de la rotation de la forme extérieure respective de la dent prothétique préfabriquée réelle (3) respective dans l'arrangement ACTUEL à l'arrangement SOUHAITÈ, c.-à-d. l'arrangement de référence (A).

9. Procédé selon la revendication 8, **caractérisé en ce que** les facteurs de correction numériques ou scannables sont assignés au montage (1) ou sont arrangés sur le montage (1) en tant que code à barres ou en tant que code à réponse rapide (code QR).

10. Utilisation des facteurs de correction numériques ou scannables (2) pour le traitement à enlever de la matière coronal (3.2) et/ou apical (3.3) d'au moins une dent prothétique préfabriquée réelle dans un montage selon l'une des revendications 1 à 7 pour utilisation dans un procédé à enlever de la matière, une géométrie de connexion pour fixer le montage (1) à une machine FAO étant assignée au montage, les facteurs de correction numériques ou scannables (2) formant des données de translation (x,y,z) et facultativement les données de la rotation de la forme extérieure respective de la dent prothétique préfabriqué réelle (3) respective dans l'arrangement ACTUEL à l'arrangement SOUHAITÈ, c.-à-d. l'arrangement de référence (A).

11. Utilisation selon la revendication 10, dans laquelle les facteurs de correction numériques ou scannables (2) comprennent des informations sur la déviation dans l'arrangement ACTUEL spatial sous la forme des données de translation (x,y,z) ou des coordonnées x,y,z, respectivement, et/ou des données de la rotation de la forme extérieure respective de l'au moins une dent prothétique préfabriquée réelle (3) respective par rapport à un arrangement de référence (A), d'au moins une dent de référence prothétique préfabriquée réelle (A3) correspondante dans un montage de référence réel (A1) et/ou d'au moins une dent de référence prothétique préfabriquée virtuelle (vA3), facultativement dans un montage de référence virtuel (vA1),
sont lus dans un dispositif de traitement de données numérique, et
(i) des données de translation (x,y,z) fournis et/ou des données de la rotation fournis de l'au moins une dent prothétique préfabriquée virtuelle ou réelle (3) par rapport à l'arrangement de référence (A),
(ii) sont corrigés aux données de translation (x,y,z) et/ou données de la rotation de l'au moins une dent prothétique préfabriquée réelle (3) dans le montage (1), et
(iii) obtenir un ensemble de données individualisé du montage (1) contenant au moins une dent prothétique préfabriquée réelle (3) fixée.

12. Utilisation d'un ensemble de données individualisé (8) obtenu par la considération des facteurs de correction numériques ou scannables (2) basés sur l'arrangement spatial de l'au moins une dent prothétique préfabriquée réelle (3) dans un montage (1) selon l'une des revendications 1 à 7,
comprenant les données de translation (x,y,z) numériques et/ou les données numériques de la rotation de l'au moins une dent prothétique préfabriquée virtuelle ou réelle (3) pour le traitement à enlever de l'au moins une dent prothétique préfabriquée réelle (3) dans le montage (1) ayant une géométrie de connexion pour fixer le montage (1) à une machine FAO, les facteurs de correction numériques ou scannables (2) formant des données de translation (x,y,z) et facultativement les données de la rotation de la forme extérieure respective de la dent prothétique préfabriquée réelle (3) respective dans l'arrangement ACTUEL à l'arrangement SOUHAITÈ, c.-à-d. l'arrangement de référence (A).

13. Procédé pour déterminer les données numériques ayant des informations sur des données de translation (x,y,z) ou des coordonnées x,y,z, respectivement, et à la rotation de la forme extérieure respective d'au moins une dent prothétique réelle de l'arrangement de référence (A), par capturer la forme extérieure de l'au moins une dent de référence prothétique préfabriquée réelle (A3) correspondante dans un montage de référence réelle (A1) en tant qu'arrangement de référence (A),
- par capturer l'arrangement de référence (A) à manière tridimensionnelle au moyen d'un scanner (5) et par capturer des informations tridimensionnelles sur l'arrangement de la forme extérieure de l'au moins une dent prothétique préfabriquée réelle (3) dans le montage (1) selon l'une des revendications 1 à 7 à manière numérique, et par obtenir les données numériques ayant des informations de l'arrangement spatial de l'arrangement de référence (A).

14. Utilisation des données numériques ayant des informations de l'arrangement spatial de l'arrangement de référence (A) pour déterminer des facteurs de correction numériques ou scannables pour le traitement coronal (3.2) et/out apical (3.3) de l'au moins une dent prothétique préfabriquée réelle dans un montage (1) selon l'une des revendications 1 à 7 pour utilisation dans un procédé à enlever de la matière, une géométrie de connexion pour fixer le montage (1) à une machine FAO étant assignée au montage.
